Europäisches Patentamt

(19) European Patent Office

Office européen des brevets

(11) Publication number: **0 222 436 B1**

# (12) EUROPEAN PATENT SPECIFICATION

(45) Date of publication of patent specification: 07.08.91

(51) Int. Cl.⁵: **B01D 45/12**, B04C 5/24, B01J 38/00

(21) Application number: **86201810.8**

(22) Date of filing: **17.10.86**

(54) Apparatus and process for separating fluid cracking catalyst particles from flue gas.

(30) Priority: **05.11.85 GB 8527215**

(43) Date of publication of application:
**20.05.87 Bulletin 87/21**

(45) Publication of the grant of the patent:
**07.08.91 Bulletin 91/32**

(84) Designated Contracting States:
**AT BE CH DE ES FR GB IT LI SE**

(56) References cited:
DE-A- 1 607 746    US-A- 2 372 514
US-A- 2 399 509    US-A- 2 511 387
US-A- 2 553 175    US-A- 4 426 212
US-A- 4 572 780

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Rombout, René
Carel van Bylandtlaan 30
NL-2596 HR The Hague(NL)**
Inventor: **Woudstra, Jouke Jan
Carel van Bylandtlaan 30
NL-2596 HR The Hague(NL)**

(74) Representative: **Aalbers, Onno et al
P.O. Box 302
NL-2501 CH The Hague(NL)**

Rank Xerox (UK) Business Services

## Description

The invention relates to an apparatus and a process for separating fluid cracking catalyst particles from flue gas and to products obtained by such a process.

It is known to separate solids from gases by imparting a rotating movement to a solids-gas mixture which is introduced substantially horizontally and tangentially in a vertical cylindrical body (e.g. a cyclone) from which gas is discharged at the top and solids are discharged from the bottom. The discharged gas usually still contains a substantial amount of solids which, to a large extent, can be removed by subsequently introducing the solids-containing gas tangentially into a second-stage cyclone.

Such multistage centrifugal separating apparatus is disclosed in US-A- 2 399 509 and US-A- 2 511 387. The apparatus described in US-A- 2 511 387 is contained in a container having an air or gas inlet through which the dust laden air or gas is received in a primary separating chamber having a number of centrifugal separator tubes which are arranged about a secondary dust bin. Each of the separators has an open ended off-take gas pipe which opens into a secondary separating chamber in which a number of centrifugal tubes of smaller diameter than that of the tubes in the primary separating chamber are mounted.

However, in order to attain substantially complete removal of small solid particles (e.g. catalyst fines) from gases, as required in e.g. catalytic cracking processes, a third separation stage is usually required. It is known from US-A-4 426 212 and US-A-4 572 780 to use cylindrical cyclones with axial entry of a solids-gas mixture for such a purpose.

A disadvantage of three-stage solids-fluid separation in particular when carried out at an elevated temperature and pressure, for instance in the regenerator of a fluid catalytic cracking process, is that in many cases the third stage separation means have to be located in a separate housing, thus requiring an additional pressure vessel and transfer lines. Alternatively, when three separation stages are incorporated in a single housing, complex supporting means will be required to cope with temperature expansion problems.

Moreover, the pressure drop over three separation stages will have an adverse effect on the possible recovery of power from fluid discharged at elevated pressure from a third separation stage.

It has now been found that the aforementioned disadvantages can be overcome by particularly arranged (first- and second stage) separation means, resulting in a simplified construction and maintenance and in a reduced pressure drop compared with three stage separation apparatuses.

The invention therefore relates to an apparatus for separating fluid cracking catalyst particles from flue gas which comprises a housing provided with a plurality of outside first separation means each of which comprises a cyclone having a substantially vertically arranged cylindrical body and feed inlet means which cooperate substantially tangentially with each body having catalyst particles outlet means in the lower section and flue gas outlet means in the upper section communicating with a plurality of annular inlet means of second stage separation means inside the housing, characterized in that the flue gas outlet means are arranged substantially radially and directed inward, in that the first stage separation means are circumferentially and symmetrically spaced around the second stage separation means, and the annular inlet means are provided with swirl imparting means and are defined between the upper sections of a plurality of tubular elements and tubular flue gas outlet means of which the lower sections are arranged substantially co-axially within said upper sections and of which tubular flue gas outlet means the upper sections cooperate with opening(s) in the upper section of the housing, and catalyst particles outlet means cooperating with the lower sections of the tubular elements.

In addition to the important advantages mentioned hereinbefore, the apparatus according to the invention even can cope with large variations in catalyst loads, which may occur e.g. during misoperation of first stage separation means such as cyclones, without becoming overloaded (thus leaving an undesirably large amount of catalyst in the discharged gas stream) or even becoming plugged by catalyst.

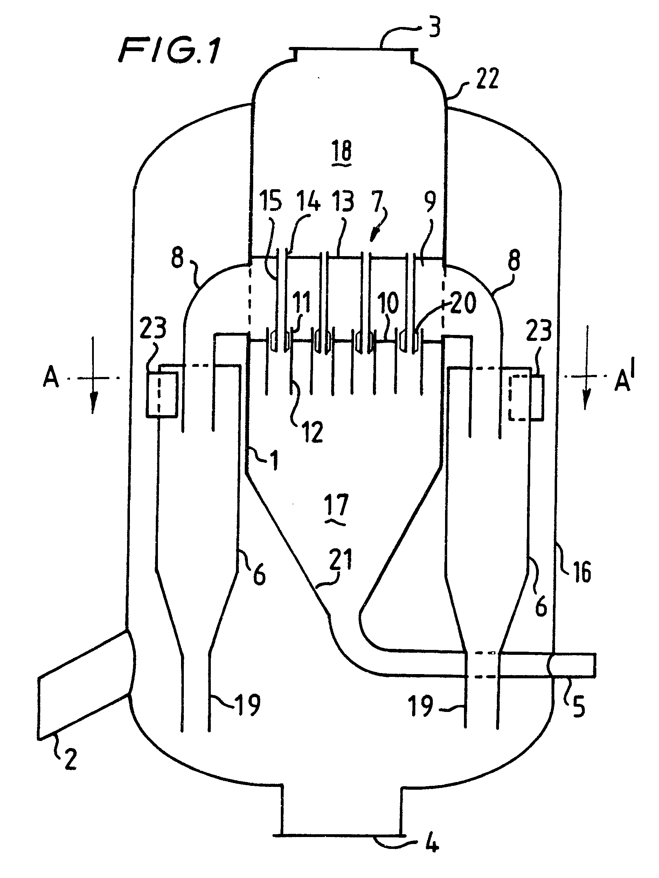

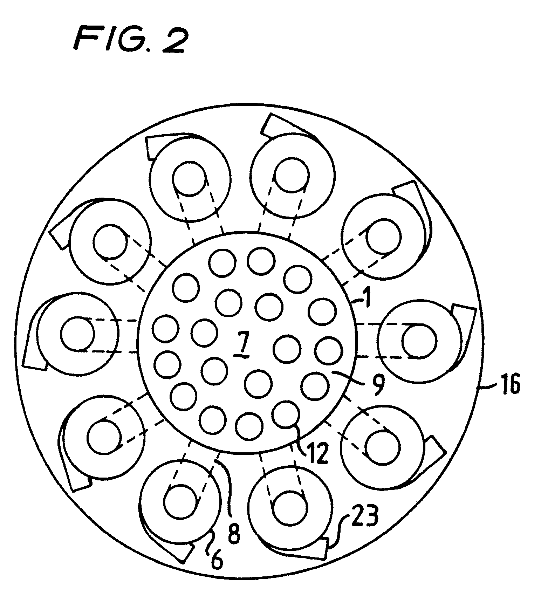

Preferred embodiments of the apparatus according to the invention are described hereinafter, using Figures 1 and 2 in which reference numerals relating to corresponding parts are the same.

In Figure 1 a longitudinal section of a fully enclosed individual separation apparatus is shown.

Figure 2 represents a cross section at AA' of the apparatus depicted in Figure 1.

The apparatus depicted in the Figures 1 and 2 comprises a housing (1) provided with a plurality (e.g. from 2-20) first stage separation means (preferably cyclones having a substantially vertically arranged cylindrical body (6)), laterally spaced around the second stage separation means (7) in order to attain a good distribution of catalyst-containing flue gas discharged through a plurality of first stage flue gas outlet means (8) into the second stage separator (7).

The arrangement of first stage cyclones as depicted saves space, compared with a set-up in which cyclones are placed underneath the second stage separation means. Optimal distribution of catalyst-containing fluid can be attained by mounting the first stage flue gas outlet means (8) substantially radially and directing them inward, which results in a substantially constant velocity of catalyst-containing flue gas in second stage inlet chamber (9) and thereby leads to a low pressure drop in the apparatus. Feed inlet means (23) are arranged tangentially and horizontally at the upper sections of bodies (6).

Chamber (9) has a lower wall (10) wherein the upper sections (11) of tubular elements (12) are arranged and an upper wall (13) wherein the upper sections (14) of tubular flue gas outlet means (15) are arranged. Suitably, both the lower- and the upper wall are curved to increase their strength. Preferably, the vertical distance between the lower- (10) and the upper (13) wall is substantially equal at any given point in order to keep the length of all flue gas outlet tubes (15) substantially equal, thus avoiding pressure differences between the various separation elements of the second stage which might otherwise cause flue gas and/or catalyst surging effects ("cross-talk") between different elements.

The tubular elements (12) are arranged substantially vertically in the central housing (1), thus providing a separate catalyst collection space (17) communicating with outlet (5) for fine catalyst particles, optionally together with a relatively small flow of carrier flue gas, and space (18) communicating with outlet means (3) for substantially catalyst-free flue gas.

In the lower sections of tubular elements (12) and/or of the cylindrical bodies (6) in which, during operation, the mixture of catalyst and flue gas is subjected to a helical movement, vortex stabilizer means (not shown) may be arranged. Swirl imparting means (20) (suitably outwardly curved swirl vanes) are located in the upper sections (11) of said tubular elements, and are preferably attached to tubular flue gas outlet means (15) which are arranged substantially co-axially within said upper sections. Alternatively, inwardly extending swirl imparting means can be attached to the upper sections (11) of tubular elements (12).

The length:diameter ratio of the tubular elements (12) is suitably from 1-10, and preferably from 2-5. The ratio of the diameters of the tubular elements (12) and the tubular flue gas outlet means (15) is suitably from 1.2-4, and preferably from 1.5-2.5. The diameter of the tubular elements (12) is suitably from 0.05-1 m, and preferably from 0.1-0.8 m; the diameter of the first stage cyclones is usually larger, due to the higher catalyst-loading of the flue gas entering the first stage, suitably from 0.5-8 m and preferably from 1-6 m.

In some cases it can be advantageous to incorporate further (third stage) separation means, such as a cyclone or a single tubular element (not shown in the Figures), in the (suitably conical) bottom section (21) of the housing (1).

In this preferred embodiment the housing (1) together with the first stage separation means is arranged in a secondary housing (16) provided with inlet means (2) for a mixture of catalyst and flue gas and outlet means (4) for relatively large catalyst particles, communicating with space (18).

When hot gas (e.g. having a temperature from 400-750 $^\circ$C, or even up to 850 $^\circ$C) are discharge through tubes (15) at an elevated pressure (e.g. from 2-50 bar abs.) during operation of the apparatus according to the invention as (part of) a fluid cracking catalyst regenerator, it can be advantageous to recover power by expanding said hot gases in a turbo expander which drives a compressor for e.g. oxygen-containing gas (such as air) which can be subsequently introduced at the required pressure through an additional fluid inlet (not shown in Fig. 1) in the bottom section of housing (16). In such a case it may be necessary to cool the hot gases to a temperature level at which the turbo expander can safely operate; for this purpose cooling fluid (e.g. steam) injection means (not shown) are suitably arranged in the upper section (22) of second stage separator (7).

The invention further relates to a process for separating fluid cracking catalyst particles from flue gas, which comprises passing a mixture of fluid cracking catalyst particles and flue gas tangentially into a first separation zone wherein the mixture is subjected to a rotating movement, removing catalyst particles through an opening in the lower section of said first zone and passing catalyst-containing flue gas through the upper section of the first zone substantially downwardly into annular spaces of a second separation zone, which annular spaces are provided with swirl imparting means and are defined between the upper sections of tubular elements and the lower sections of tubular flue gas outlet means arranged substantially co-axially within said upper sections, imparting a helical movement to the catalyst-containing flue gas in the tubular elements to separate remaining catalyst from flue gas, removing catalyst through the lower sections of the tubular elements and removing flue gas upwardly through the upper sections of the tubular flue gas outlet means.

Apart from flue gas, other gases such as gaseous hydroconversion products can also be separated from fluid cracking catalyst particles in the above-described manner.

Suitably, catalyst particles (and sometimes fines) which have been re-activated by burning off coke deposits therefrom and separated from the resulting flue gas in the apparatus according to the invention are re-used in e.g. a fluid catalytic cracking riser reactor.

Moreover, the invention relates to fluid cracking catalyst particles separated by a process as described hereinbefore.

The invention will be further elucidated by means of the following Example.

EXAMPLE

A feed stream of cracking catalyst particles and flue gas in weight ratio of 4.5 enters feed inlet (23) of a separation apparatus as depicted in Figures 1 and 2 at a temperature of 700 °C, a pressure of 1.9 bar gauge and a vapour velocity of 20 m/s. Catalyst particles are removed through solids outlets (19) and (12) with a separation efficiency for the two stages combined of more than 99.9% on a weight basis.

## Claims

1. Apparatus for separating fluid cracking catalyst particles from flue gas which comprises a housing (1) provided with a plurality of outside first separation means each of which comprises a cyclone having a substantially vertically arranged cylindrical body (6) and feed inlet means (23) which cooperate substantially tangentially with each body (6) having catalyst particles outlet means (19) in the lower section and flue gas outlet means (8) in the upper section communicating with a plurality of annular inlet means (12) of second stage separation means inside the housing (1), characterized in that the flue gas outlet means (8) are arranged substantially radially and directed inward, in that the first stage separation means are circumferentially and symmetrically spaced around the second stage separation means (7), and the annular inlet means are provided with swirl imparting means (20) and are defined between the upper sections (14) of a plurality of tubular elements and tubular flue gas outlet means (15) of which the lower sections are arranged substantially co-axially within said upper sections and of which tubular flue gas outlet means (15) of the upper sections cooperate with opening(s) in the upper section (13) of the housing (1), and catalyst particles outlet means (5) cooperating with the lower sections of the tubular elements (12).

2. Apparatus according to claim 1, characterized in that the apparatus is arranged in a secondary housing (16).

3. Apparatus according to claim 1 or 2, characterized in that the first and second stage catalyst particles outlet means (19, 5) are in communication with separate sections of the secondary housing (16).

4. Apparatus according to claim 1 or 2, characterized in that vortex stabilizer means are arranged in the lower sections of the tubular elements (6, 12).

5. Apparatus according to claim 1 or 2, characterized in that the length:diameter ratio of a tubular element (12) is from 1-10, and preferably from 2-5.

6. Apparatus according to claim 1 or 2, characterized in that the ratio of the diameters of the tubular elements (12) and the tubular flue gas outlet means (15) is from 1.2-4, and preferably from 1.5-2.5.

7. Apparatus according to claim 1 or 2, characterized in that the diameter of the tubular elements (12) is from 0.05-1 m, and preferably from 0.1-0.8 m.

8. Process for separating fluid cracking catalyst particles from flue gas, characterized in that use is made of an apparatus as claimed in any one of claims 1-7.

## Revendications

1. Appareil pour la séparation de particules de catalyseur de craquage fluide à partir de gaz usés, qui comporte une enceinte (1) pourvue de premiers moyens de séparation extérieurs, dont chacun comprend un cyclone présentant un élément cylindrique sensiblement agencé de façon sensiblement verticale (6) et des moyens d'admission de charge (23) qui coopèrent sensiblement de façon sensiblement tangente avec un élément (6) présentant des moyens d'évacuation des particules de catalyseur (19) dans la zone inférieure et des moyens d'évacuation des gaz usés (8) dans la zone supérieure communiquant avec une pluralité de moyens annulaires d'admission (12) de moyens de séparation de second stade a l'intérieur de l'enceinte (1), caractérisé en ce que les moyens d'évacuation des gaz usés (8) sont agencés de façon sensiblement radiale et orientés vers l'intérieur, en ce que les moyens de séparation du premier stade sont circonférentiellement et symétriquement espacés autour des moyens de séparation de second stade (7), et les moyens d'admission annulaires sont pourvus de moyens conférant un tourbillonnement (20) et sont délimités entre les zones supérieures (14) d'une pluralité d'éléments tubulaires et de moyens tubulaires (15) d'évacuation des gaz usés dont les sections inférieures sont agencées de façon sensiblement coaxiale à l'intérieur desdites zones supérieures et dont les moyens tubulaires (15) d'évacuation des gaz usés des zones supérieures coopèrent avec une (des) ouverture(s) dans la zone supérieure (13) de l'enceinte (1), et des moyens d'évacuation des particules de catalyseur (5) coopérant avec les zones inférieures des éléments tubulaires (12).

2.  Appareil selon la revendication 1, caractérisé en ce que l'appareil est monté dans une enceinte auxiliaire (16).

3.  Appareil selon la revendication 1 ou 2, caractérisé en ce que les moyens d'évacuation des particules de catalyseur du premier et second stades (19, 5) sont en communication avec des zones séparées de l'enceinte auxiliaire (16).

4.  Appareil selon la revendication 1 ou 2, caractérisé en ce que des moyens de stabilisation des tourbillons sont montés dans les zones inférieures des éléments tubulaires (6, 12).

5.  Appareil selon la revendication 1 ou 2, caractérisé en ce que le rapport longueur:diamètre d'un élément tubulaire (12) se situe entre 1 et 10, et de préférence entre 2 et 5.

6.  Appareil selon la revendication 1 ou 2, caractérisé en ce que le rapport des diamètres des éléments tubulaires (12) et des moyens tubulaires d'évacuation (15) des gaz usés se situe entre 1,2 et 4, et de préférence entre 1,5 et 2,5.

7.  Appareil selon la revendication 1 ou 2, caractérisé en ce que le diamètre des éléments tubulaires (12) se situe entre 0,05 et 1 mètre, et de préférence entre 0,1 et 0,8 mètre.

8.  Procédé pour la séparation de particules de craquage fluide à partir de gaz usés, caractérisé en ce que l'on met en oeuvre un appareil tel que revendiqué dans l'une quelconque des revendications 1 à 7.

**Patentansprüche**

1.  Apparat zur Trennung von fließfähigen Krackkatalysator-Teilchen von Abgas, welcher ein Gehäuse (1) aufweist, das mit einer Vielzahl von außerhalb desselben angeordneten ersten Trennmitteln versehen ist, die je einen Zyklon mit einem im wesentlichen vertikal angeordneten zylindrischen Körper (6) und Zufuhreinlaßmittel (23) aufweisen, welche im wesentlichen tangential mit jedem Körper (6) zusammenwirken, der mit Katalysatorteilchen-Auslaßmitteln (19) im unteren Abschnitt und Abgasauslaßmitteln (8) im oberen Abschnitt versehen ist, welche mit einer Vielzahl von ringförmigen Einlaßmitteln (12) von Zweitstufen-Trennmitteln innerhalb des Gehäuses (1) in Verbindung stehen, dadurch gekennzeichnet, daß die Abgasauslaßmittel (8) im wesentlichen radial und nach innen gerichtet angeordnet sind, daß die Erststufen-Trennmittel in Umfangsrichtung und symmetrisch beabstandet um die Zweitstufen-Trennmittel (7) herum angeordnet sind, und die ringförmigen Einlaßmittel mit Verwirbelungsmitteln (20) ausgestattet und zwischen den oberen Abschnitten (11) einer Vielzahl von rohrförmigen Elementen und rohrförmigen Abgasauslaßmitteln (15) definiert sind, deren untere Abschnitte im wesentlichen koaxial innerhalb der oberen Abschnitte angeordnet sind und deren obere Abschnitte mit Öffnungen im oberen Abschnitt (13) des Gehäuses (1) zusammenwirken und Katalysatorteilchen-Auslaßmittel (5) mit den unteren Abschnitten der rohrförmigen Elemente (12) zusammenwirken.

2.  Apparat nach Anspruch 1, dadurch gekennzeichnet, daß er in einem Sekundärgehäuse (16) angeordnet ist.

3.  Apparat nach Anspruch 1 oder 2, dadurch gekennzeichnet, daß die Katalysatorteilchen-Auslaßmittel (19, 5) der ersten und der zweiten Stufe mit gesonderten Abschnitten des Sekundärgehäuses (16) in Verbindung stehen.

4.  Apparat nach Anspruch 1 oder 2, dadurch gekennzeichnet, daß Wirbelstabilisiermittel in den unteren Abschnitten der rohrförmigen Elemente (6, 12) angeordnet sind.

5.  Apparat nach Anspruch 1 oder 2, dadurch gekennzeichnet, daß das Verhältnis Länge:Durchmesser eines rohrförmigen Elementes (12) von 1 - 10, und vorzugsweise von 2 - 5 beträgt.

6.  Apparat nach Anspruch 1 oder 2, dadurch gekennzeichnet, daß das Verhältnis der Durchmesser der rohrförmigen Elemente (12) und der rohrförmigen Gasauslaßmittel (15) von 1,2 - 4 und vorzugsweise von 1,5 - 2,5 beträgt.

7.  Apparat nach Anspruch 1 oder 2, dadurch gekennzeichnet, daß der Durchmesser der rohrförmigen Elemente (12) von 0,05 - 1 m und vorzugsweise von 0,1 - 0,8 m beträgt.

8. Verfahren zur Trennung von fließfähigen Krackkatalysator-Teilchen von Abgas, dadurch gekennzeichnet, daß ein Apparat nach einem der Ansprüche 1 - 7 verwendet wird.

FIG.1

# FIG. 2